# EUROPÄISCHE PATENTANMELDUNG

(11) **EP 3 879 252 A1**
(43) Veröffentlichungstag der Anmeldung: **15.09.2021**
(21) Anmeldenummer: 20163042.3
(22) Anmeldetag: 13.03.2020
(51) Int. Cl.: G01L 5/00

(54) **PRÜFVERFAHREN UND PRÜFVORRICHTUNG, ANLERNVERFAHREN**

(71) Anmelder: Illinois Tool Works Inc., Glenview, IL 60025 (US)
(72) Erfinder: Leidig, Christoph, 91541 Rothenburg o.d.T. (DE); Sbongk, Albert, 97996 Niederstetten (DE)
(74) Vertreter: HGF

(57) **Zusammenfassung**

Die Erfindung betrifft ein Prüfverfahren mit den Schritten:
- Anordnen einer Prüflehre (200) in einer Prüfvorrichtung (1) mit einem Sensorelement (17) derart, dass eine auf die Prüflehre (200) ausgeübte Kraft auf das Sensorelement (17) übertragen wird;
- Anordnen eines Montage- oder Befestigungselements an oder in einem Aufnahmeabschnitt (202; 213) der Prüflehre (200);
- Ausüben einer manuellen Montagekraft auf das Montage- oder Befestigungselement, bis das Montage- oder Befestigungselement vollständig an oder in dem Aufnahmeabschnitt (202; 213) montiert ist; und

Erfassen und Auswerten von Sensorsignalen, die während des Ausübens der manuellen Montagekraft durch das Sensorelement (17) ausgegeben werden. Die Erfindung begrifft auch eine Prüfvorrichtung sowie ein Verfahren zum Anlernen eines Werkers beim Setzen eines Montage- oder Befestigungselements.

## Beschreibung

Die Erfindung betrifft ein Prüfverfahren und eine Prüfvorrichtung für ein Montage- oder Befestigungselement. Insbesondere betrifft die Erfindung Verbesserungen bei der Auslegung von Montage- oder Befestigungselementen und Montagefällen damit im Hinblick auf die auftretenden Kräfte bei der manuellen Montage. Die Erfindung betrifft auch ein Anlernverfahren unter Verwendung des Prüfverfahrens.

Bei der Montage von Karosserieteilen insbesondere im Automobilbereich werden häufig verschiedene Arten von Befestigungselementen wie etwa Verbinder, Klemmverbindungen, Steckerverbindungen oder dergleichen oder sonstigen Montageelementen wie etwa Verschlussstopfen oder dergleichen verwendet. Diese werden bei der Montage typischerweise von Hand gesetzt. Dabei werden zunehmend höhere Anforderungen an die Ergonomie gestellt. Beim Setzen des Montage- oder Befestigungselements wird vom Werker beispielsweise eine zunehmende Eindrückkraft ausgeübt, bis das Montage- oder Befestigungselement einschnappt. Eine Anforderung kann darin bestehen, die Eindrückkraft zu minimieren. Bei Schnappelementen erfolgt das Einschnappen schlagartig. Der Werker hat dabei kaum die Möglichkeit, exakt rechtzeitig mit dem Drücken aufzuhören, es kommt daher typischerweise zu einem Nachdrücken, auch Überdrücken des Montage- oder Befestigungselements genannt. Bei diesem Nachdrücken oder Überdrücken kann der Werker eine besonders hohe Reaktionskraft an den Fingern erfahren. Je höher diese Reaktionskraft ist, umso höher kann die Gefahr von Verletzungen oder Veränderungen an den Fingergelenken sein. Es ist daher eine Anforderung, Montage- oder Befestigungselemente und damit ausgebildete Verbindungen hinsichtlich der auftretenden Kräfte zu prüfen, um potenzielle ergonomische Defizite und Probleme zu identifizieren und zu eliminieren oder zu verbessern. Es sind Prüfvorrichtungen und -verfahren für Montage- oder Befestigungselemente bekannt. Die bekannten Vorrichtungen und Verfahren haben einige Nachteile.

Einerseits sind Laborprüfungen bekannt. Dabei wird eine Montagekraft durch eine Universalprüfmaschine aufgebracht. Genauer gesagt wird ein Prüfling in einer Prüflehre eingespannt, wird ein standardisierter Prüfpin maschinell auf den Prüfling gefahren und wird eine Reaktionskraft am Bauteil messtechnisch aufgenommen und ausgewertet. Typischerweise wird dabei ein vorbestimmter Weg mit einer vorbestimmten Vorschubgeschwindigkeit oder einem vorbestimmten Kraftverlauf unter definierten labormäßigen Bedingungen abgefahren. Der vorbestimmte Weg kann beispielsweise ein Weg bis zum Einschnappen des Montage- oder Befestigungselements sein. Der Prüfpin kann einen standardisierten Durchmesser von beispielsweise 12 mm aufweisen. Die vorbestimmte Geschwindigkeit kann typischerweise 100 bis 500 mm/min betragen. Ein vorbestimmter Kraftverlauf kann beispielsweise einen linearen Kraftanstieg umfassen, und/oder der Vorschub kann beendet werden, sobald ein vorbestimmter Kraftabfall eintritt. Kraft-, Weg- und Geschwindigkeitsprogramme können kombiniert werden. Die Prüfung mittels solcher Laborprüfmaschinen erbringt aufgrund der Standardisierung eine hohe Reproduzierbarkeit und Vergleichbarkeit und kann daher eine gute Hilfe bei der Qualitätssicherung oder zum Nachweis der grundsätzlichen Funktionserfüllung sein.

Allerdings entsprechen die standardisierten Bedingungen oft nicht den realen Bedingungen, die der Werker am Automobil vorfindet. Dies kann schon die Positionierung und Winkellage der Montagestelle betreffen. Karosserieteile, an denen das Montage- oder Befestigungselement zu setzen sind, können beispielsweise vollständig lackiert sein, das Loch kann aufgrund unterschiedlicher Herstellung (Bohren, Stanzen, Laserschneiden) bestimmte Radien oder Grate aufweisen. Auch sind die tatsächlich auftretenden Geschwindigkeiten, etwa bei Schnappelementen, teilweise erheblich höher als die Verfahrgeschwindigkeit im Labortest, was auch einen wesentlichen Einfluss auf die auftretenden Kräfte haben kann. Ein Überdrücken wird typischerweise nicht nachgebildet, daher kann eine aus ergonomischer Sicht bedeutsame Kraftspitze nicht erfasst werden. Der Prüfpin kann nur eine grobe Näherung eines Fingers sein. Auch wird in der Praxis oft von dem streng linearen Verfahrweg des Prüfpins abgewichen. Mit anderen Worten, es wird oft nicht exakt in der Achse des Montage- oder Befestigungselements, sondern unter einer Winkelabweichung, mit kreisenden oder intermittierenden Bewegungsabläufen etc. gedrückt. Aufgrund all dieser Abweichungen kommt es in der Laborprüfung, die nur eine standardisierte, lineare Krafteinleitung erlaubt, zu einer unrealistischen Kraftausübung. Daher haben Laborprüfungen gerade wegen des auslegungsgemäß hohen Grads an Standardisierung oft nur geringen Aussagewert hinsichtlich der tatsächlichen Belastung des Werkers.

Andererseits sind portable Prüfsysteme bekannt wie etwa ein Sensorhandschuh oder eine Sensorfolie.

Beim Sensorhandschuh sind an verschiedenen Stellen eines Handschuhs, beispielsweise Fingerkuppen, Fingergelenken, Handgelenk etc. Sensoren, etwa Kraftmesszellen, angebracht. Derartige Handschuhe sind jedoch für gröbere Verrichtungen wie etwa Montagevorgänge von großen, mit den Händen zu manipulierenden Bauteilen ausgelegt. Da die Sensorzellen vergleichsweise groß und unflexibel sind, ist die Handhabung von Montage- oder Befestigungselementen damit vergröbert. Die Kalibrierung der Sensoren ist sehr aufwändig und muss bauteilspezifisch vorgenommen werden. Trotzdem stört die dicke Zwischenschicht zwischen Finger und Kraftausübungspunkt die Wahrnehmung und Krafteinleitung des Werkers und verfälscht die Erfassung der Messwerte. Daher sind die Messergebnisse mit hohen Unsicherheiten und Streuungen behaftet.

Aus anderen Anwendungen wie etwa der Prozesstechnik (beispielsweise der Überprüfung von Verklebungen, die unter Druck stattfinden) sind Sensorfolien bekannt, die über eine Schnittstelle mit einem Rechner verbunden sind. Für Versuchszwecke haben die Erfinder der vorliegenden Anmelder ein Montage- oder Befestigungselement mit einer solchen Folie versehen, sodass der Werker bei der Prüfung auf die Folie drücken konnte. Auch hier war eine teilespezifische Kalibrierung erforderlich. Die Folien sind auch nicht sehr robust, was zu einem raschen Ausfall oder Verschlechterung der Messeigenschaften führen kann. Bei versuchsweisen Prüfläufen ist es auch zum Knicken und damit verbunden einer dauerhaften Schädigung der Folie gekommen, was sie unbrauchbar macht. Ferner ist die Aufzeichnungsfrequenz der Schnittstellen, die für solche Folien zur Verfügung stehen, mit typischerweise etwa 200 Hz zu gering, um essentielle Messpunkte wie beispielsweise den entscheidende Punkt des schlagartigen Einschnappens zuverlässig zu erfassen.

Zusammenfassend kann festgehalten werden, dass manuelle Messverfahren, die eine irgendwie geartete Zwischenlage zwischen dem Bauteil und dem Finger des Werkers vorsehen, zu Verfälschungen sowohl der Kraftmessung selbst wie auch das Empfinden des Werkers führen kann, was wiederum das Drückverhalten ändern kann.

Insgesamt ist eine zuverlässige und realistische Erfassung aller denkbaren Montagesequenzen mit keinem bekannten Verfahren möglich.

Beim Anlernen eines Werkers ist es zunehmend ein Ziel, im Hinblick auf ergonomische Aspekte optimierte Bewegungsabläufe einzuüben. Dies ist am konkreten Werkstück ohne weiteres praxisnah möglich, beruht aber oft im Wesentlichen auf der subjektiven Wahrnehmung des Werkers. Eine Rückmeldung über die tatsächlich auftretenden Reaktionskräfte ist kaum möglich.

Eine Aufgabe der vorliegenden Erfindung ist es, die vorgenannten Nachteile im Stand der Technik zu vermeiden. Eine Teilaufgabe besteht darin, ein Verfahren und eine Vorrichtung anzugeben, mit der eine Prüfung eines Setzvorgangs eines Montage- oder Befestigungselements eine zuverlässigere und realistischere Erfassung und Evaluierung der auftretenden Reaktionskräfte ermöglicht. Eine weitere Teilaufgabe besteht darin, eine praxisnahe Anlernung eines Werkers unter Beisteuerung objektiver Kriterien besser zu ermöglichen.

Die Aufgabe wird wenigstens in Teilaspekten durch ein Prüfverfahren und eine Prüfvorrichtung mit den Merkmalen der unabhängigen Ansprüche gelöst. Vorteilhafte Weiterbildungen und bevorzugte Ausführungsformen bilden die Gegenstände der Unteransprüche.

Das erfindungsgemäße Prüfverfahren weist auf:
- Anordnen einer Prüflehre in einer Prüfvorrichtung mit einem Sensorelement derart, dass eine auf die Prüflehre ausgeübte Kraft auf das Sensorelement übertragen wird;
- Anordnen eines Montage- oder Befestigungselements an oder in einem Aufnahmeabschnitt der Prüflehre;
- Ausüben einer manuellen Montagekraft auf das Montage- oder Befestigungselement, bis das Montage- oder Befestigungselement vollständig an oder in dem Aufnahmeabschnitt montiert ist; und
- Erfassen und Auswerten von Sensorsignalen, die während des Ausübens der manuellen Montagekraft durch das Sensorelement ausgegeben werden.

Vorzugsweise ist vorgesehen, dass die manuelle Montagekraft durch Führungselemente der Prüfvorrichtung in eine lineare Druckkraft, die in einer definierten Richtung auf das Sensorelement wirkt, umgewandelt wird. Damit kann unabhängig von der Winkelrichtung der manuellen Montagekraft stets eine linear und zentrisch wirkende Kraft auf das Sensorelement ausgeübt werden, die der Reaktionskraft in der realen Montagesituation entspricht.

Es kann auch vorgesehen sein, dass eine Kalibrierung des Sensorelements derart erfolgt, dass das Sensorelement ohne Einwirkung der manuellen Montagekraft einen Nullausgang aufweist. Die Kalibrierung kann beispielsweise mechanisch oder elektrisch oder elektronisch oder virtuell am Sensorelement selbst, an einer Schnittstelleneinheit oder einer Auswertungsvorrichtung oder durch ein Softwareprogramm erfolgen.

Vorzugsweise ist vorgesehen, dass ein durch das Sensorelement ausgegebenes, erfasstes Sensorsignal digitalisiert wird, um ein Sensordatensignal zu erzeugen, und das Auswerten an dem Sensordatensignal vorgenommen wird.

Vorzugsweise ist vorgesehen, dass das Sensordatensignal über eine Schnittstelleneinheit, die mit dem Sensorelement verbunden ist, kabelgebunden oder drahtlos an eine Auswertungsvorrichtung übertragen wird.

Vorzugsweise ist vorgesehen, dass das Auswerten wenigstens eines der folgenden umfasst:
- Aufzeichnen von Sensordatensignalen über einen festgelegten oder auswählbaren oder einstellbaren oder adaptiven Zeitraum;
- Visualieren der Sensordatensignale in Form eines Graphs oder einer Tabelle an einer Anzeigeeinrichtung;
- Verwerfen von Sensordatensignalen, deren Amplitude unterhalb einer festgelegten oder auswählbaren oder einstellbaren oder adaptiven Ansprechschwelle liegen, für die Aufzeichnung und/oder Visualisierung;
- Korrelieren eines ermittelten Kraftverlaufs mit einem aufgezeichneten Bewegungsablauf.

Die erfindungsgemäße Prüfvorrichtung kann zur Ausführung des vorstehend beschriebenen Verfahrens ausgebildet sein. Sie weist eine Basis, die ein Sensorelement trägt, und eine Aufspannplatte mit einer Halterung zur Aufnahme einer Prüflehre auf. Die Aufspannplatte ist gegenüber der Basis beweglich gelagert und derart angeordnet und geführt, dass eine auf die Aufspannplatte wirkende Kraft auf das Sensorelement übertragen wird. Die Aufspannplatte kann insbesondere auf dem Sensorelement ruhen. Hierzu kann ein Druckelement, beispielsweise ein Stempel, von der Aufspannplatte in Richtung des Sensorelements abragen und an dem Sensorelement anliegen. Die Halterung kann ein oder mehrere Aufnahmeelemente aufweisen. Die Prüflehre weist wenigstens einen Aufnahmeabschnitt zur Aufnahme eines Montage- oder Befestigungselements auf und ist an einen Montagefall des Montage- oder Befestigungselements angepasst. Die Halterung kann austauschbar sein.

Es können mehrere Halterungen für unterschiedliche Montage- oder Befestigungselemente und/oder Prüflehren vorgesehen sein. Es können auch mehrere Sensorelemente vorgesehen sein. Montage- oder Befestigungselemente sind vorzugsweise Verbinder oder Stecker oder Verschlusstopfen, insbesondere aus Kunststoff oder Metall, sie können insbesondere Federelemente aufweisen, die bei fertiger Montage einrasten. Prüflehren können beispielswiese Standardlehren sein oder unterschiedliche Klammern, Bleche oder Fahrzeugausschnitte, beispielsweise Karosserieausschnitte, sein mit Abmessungen und Eigenschaften wie etwa Material, Dicke, Wölbung, Steifigkeit etc., die der realen Anwendung nachempfunden oder entnommen sind.

Die Prüfvorrichtung kann zur Lagerung und Führung der Aufspannplatte eine Parallelführungseinheit mit mindestens zwei parallelen Führungsstangen aufweisen, die an der Basis axial verschiebbar gelagert sind.

Die Prüfvorrichtung kann ferner eine Schnittstelleneinheit aufweisen, die ausgebildet ist, um durch das Sensorelement ausgegebene Sensorsignale zu digitalisieren, um Sensordatensignale zu erzeugen.

Die Prüfvorrichtung kann portabel sein. Sie kann auch nach oben, also zu der Seite der Aufspannplatte, auf welcher das Montage- oder Befestigungselement angeordnet wird, offen und damit für einen Werker frei zugänglich sein.

Die Prüfvorrichtung kann ferner eine Auswertungsvorrichtung aufweisen oder mit einer Auswertungsvorrichtung zu einem Prüfsystem verbunden sein, wobei die Auswertungsvorrichtung drahtgebunden oder drahtlos mit der Datenschnittstelle verbunden oder verbindbar ist, um die Sensordatensignale zu empfangen, und die mit Mitteln zur Auswertung, insbesondere zur Evaluierung und/oder Visualisierung der empfangenen Daten versehen ist. Die Mittel zur Auswertung können durch Hardware und/oder Software verwirklicht sein.

Das Evaluieren kann die Bestimmung eines Lastniveaus aufweisen. Das Evaluieren kann Rückschlüsse über ergonomische Aspekte des geprüften Montage- oder Befestigungselements oder Montagefalls umfassen.

Die Auswertungsvorrichtung kann ein mobiles Endgerät wie etwa Smartphone, Tablet oder sonstiger portabler Computer sein oder aufweisen und/oder eine servergebundene Einrichtung sein oder aufweisen, die über ein mobiles Endgerät zugänglich ist. Die Datenschnittstelle kann drahtlos, beispielsweise über Bluetooth oder einen anderen Nahbereichsdatenübertragungsstandard, einen WLAN-Standard oder einen Mobilfunkstandard, oder drahtgebunden, etwa über Ethernet, USB, Mini-USB, Micro-USB, oder einen anderen proprietären oder freien Datenbusstandard arbeiten. Die Datenschnittstelle kann wahlweise über mehrere Datenübertragungsstandards verfügen.

Ein Anlernverfahren kann von dem vorstehend beschriebenen Prüfverfahren Gebrauch machen. Insbesondere wird in einem erfindungsgemäßen Verfahren zum Anlernen eines Werkers beim Setzen eines Montage- oder Befestigungselements das Prüfverfahren ausgeführt und wird dem Werker eine Auswertung der Sensorsignale nach jedem Prüfvorgang bereitgestellt. Ein Prüfvorgang entspricht dabei dem Setzen eines Montage- oder Befestigungselements an der Prüfvorrichtung unter Auswertung der Sensorsignale. Besonders vorteilhaft kann bei dem Anlernverfahren von einer visuellen Aufzeichnung des Bewegungsablaufs und einer Korrelation mit dem ermittelten Kraftverlauf Gebrauch gemacht werden.

Mit der erfindungsgemäßen Vorrichtung und den erfindungsgemäßen Verfahren können zumindest die nachstehenden Vorteile erzielt werden:
- eine positive Visualisierung der tatsächlichen Montage- und Überkräfte;
- eine gute Vergleichbarkeit zwischen den Messergebnissen und den Laborwerten;
- eine Entbehrlichkeit teilespezifischer Kalibrierung;
- eine sehr hohe Aufzeichnungsfrequenz (beispielsweise bis zu 2000 Messungen pro Sekunde);
- eine Berücksichtigung der realistischen Montagegeschwindigkeit (dies hat beträchtlichen Einfluss auf die Kraftniveaus);
- eine direkte Prüfmontage ohne Schichten (Sensoren, Folien, ...) oder Vorrichtungen (z.B. Prüfstifte), was eine Verfälschung der Ergebnisse beseitigt;
- ein Anlernen kann praxisnah und objektiviert durchgeführt werden.

Weitere Merkmale, Vorteile und Aufgaben der Erfindung werden aus der Beschreibung von Ausführungsbeispielen anhand der beigefügten Zeichnungen ersichtlich werden. In den Zeichnungen ist bzw. sind:
- Figur 1: eine perspektivische Darstellung eines Prüfsystems mit Prüfvorrichtung und Auswertungsvorrichtung nach einem Ausführungsbeispiel der vorliegenden Erfindung mit einer Prüflehre aus einem Blickwinkel von schräg oben;
- Figur 2: eine Darstellung eines Diagrammbereichs einer Benutzerschnittstelle in dem Prüfsystem;
- Figur 3: eine perspektivische Darstellung einer Prüfvorrichtung in dem Prüfsystem mit der Prüflehre aus einem anderen Blickwinkel;
- Figur 4: eine Seitenansicht der Prüfvorrichtung;
- Figur 5: eine perspektivische Darstellung der Prüfvorrichtung gemäß Figur 3 ohne Prüflehre;
- Figur 6: eine perspektivische Darstellung der Prüfvorrichtung gemäß Figur 3 mit einer anderen Prüflehre;
- Figur 7: eine Seitenansicht der Prüfvorrichtung mit der anderen Prüflehre;
- Figur 8: eine Vorderansicht der Prüfvorrichtung mit der anderen Prüflehre;
- Figur 9: eine perspektivische Darstellung der Prüfvorrichtung mit der anderen Prüflehre aus einem Blickwinkel von schräg unten.

Die Figuren sind als rein schematisch zu verstehen, ohne eine Beschränkung auf bestimmte Winkel- oder Dimensionsverhältnisse zu implizieren, es sei denn, es wäre ausdrücklich so beschrieben. Zur vereinfachten Beschreibung und ohne eine Beschränkung auf eine Orientierung im Raum zu implizieren wird im Zusammenhang mit einem beschriebenen Ausführungsbeispiel eine Richtung, von welcher aus eine Prüfkraft ausgeübt wird, als vertikal oben, die entgegengesetzte Richtung als vertikal unten, eine Richtung in Verlängerung einer senkrechten Verbindung von Achsen zweier Führungsstangen einer Parallelführung als seitlich, eine Richtung senkrecht zur seitlichen Richtung und der vertikalen Richtung zu einer Schnittstelleneinheit hin als vorn und die entgegengesetzte Richtung als hinten angesehen, dies ist aber völlig willkürlich und dient nur der Veranschaulichung.

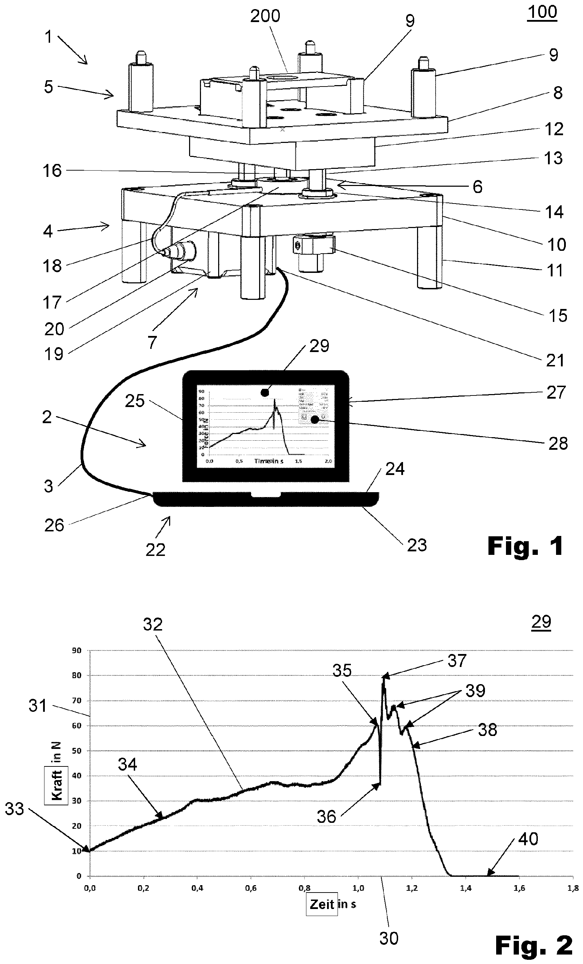

Ein Prüfsystem 100 gemäß einem Ausführungsbeispiel der vorliegenden Erfindung kann eine Prüfvorrichtung 1 und eine Auswertungsvorrichtung 2 aufweisen (Figur 1). Die Prüfvorrichtung 1 und die Auswertungsvorrichtung 2 können über eine Datenverbindung 3 miteinander verbunden sein. Die Prüfvorrichtung 1 kann eine Basis 4, eine Aufnahmeeinheit 5 zur Aufnahme einer Prüflehre 200, eine Linearführungseinheit 6 zur Lagerung und linearen Führung der Aufnahmeeinheit 5 an der Basis 4, und eine Sensoreinheit 7 aufweisen.

Die Aufnahmeeinheit 5 kann eine Aufspannplatte 8 aufweisen, welche ein oder mehrere Gruppen (hier zwei Gruppen) von jeweils einem oder mehreren Aufnahmeelementen 9 (hier zwei Aufnahmeelemente 9 einer ersten Gruppe und vier Aufnahmeelemente 9 einer zweiten Gruppe) tragen kann. Jede Gruppe von Aufnahmeelementen 9 kann an eine bestimmte Form einer Prüflehre 200 angepasst sein und diese aufnehmen. Jede Gruppe von Aufnahmeelementen 9 kann als eine Halterung im Sinne der Erfindung verstanden werden. Die Basis 4 kann einen Rahmen 10 aufweisen, der in diesem Ausführungsbeispiel die Form einer Platte annehmen kann, die durch mehrere Füße 11 aufgeständert ist.

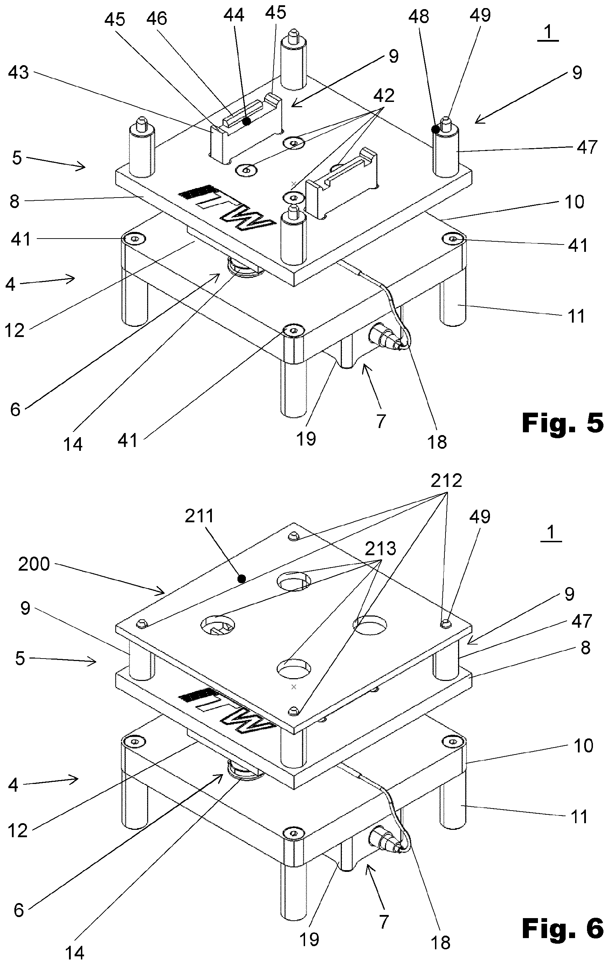

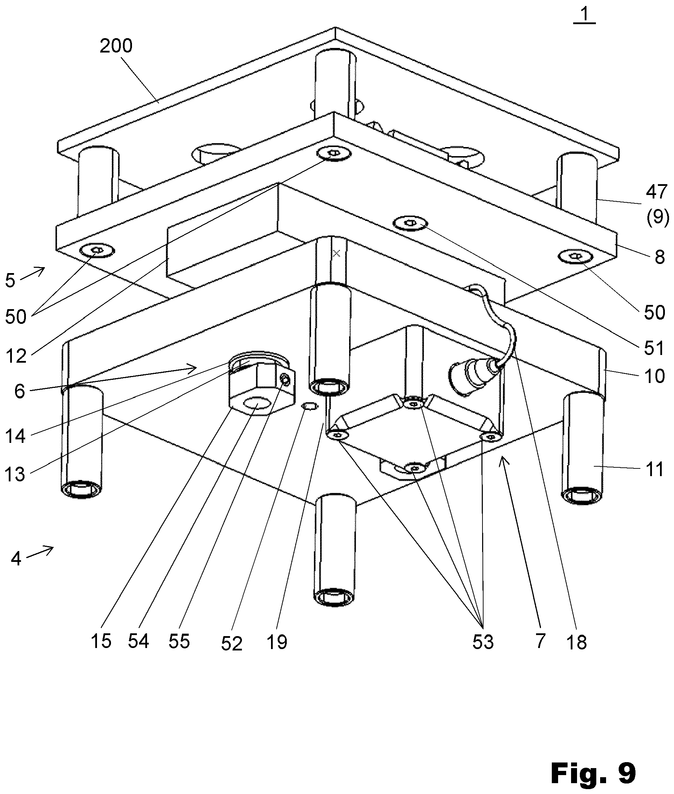

Die Linearführungseinheit 5 kann einen Plattenträger 12, welcher die Aufspannplatte 8 trägt, mehrere (hier zwei) parallele Führungsstangen 13, die in oder an dem Plattenträger 12 fest montiert sind, jeweilige Lagereinheiten 14, mit welchen jeweils eine der Führungsstangen 13 an dem Rahmen 10 axial verschiebbar gelagert ist, und jeweilige Feststeller 15, welche auf einer von der Aufnahmeeinheit 5 weg weisenden Seite (Unterseite) des Rahmens 10 an jeweils einer der Führungsstangen 13 befestigt sind, aufweisen (vgl. etwa Figuren 1, 4, 7, 8). Der Plattenträger 12 kann die Form einer Platte oder eines Blocks aufweisen und mittels Schrauben 42 an der Aufspannplatte 8 befestigt sein (vgl. etwa Figur 5). Die Führungsstangen 13 können in den Plattenträger 12 beispielsweise eingeschraubt oder eingesteckt und spielfrei gesichert sein. Die Lagereinheiten 14 können beispielsweise jeweils eine oder zwei Gleitbuchsen aufweisen, die von einer oder beiden Seiten des Rahmens 10 in entsprechenden Bohrungen aufgenommen sind. Die Feststeller 15 können unterhalb der Trägerplatte 8 jeweils auf einem Wellenabsatz 54 der Führungsstange 13 aufgesteckt und mittels einer Schraube 55 festgezogen sein (vgl. Figur 9). Die Schraube 55 kann beispielsweise in eine Nut oder eine Bohrung oder eine Senkung (nicht dargestellt bzw. verdeckt) am Umfang des Wellenabsatzes 54 greifen, um dem Feststeller eine in axialer und/oder rotatorischer Richtung definierte und gesicherte Lage zu vermitteln. Mittels der Führungsstangen 13 ist der Plattenträger 12 und damit auch die Aufspannplatte 8, mithin die gesamte Aufnahmeeinheit 5, gegenüber dem Rahmen 10 der Basis 4 linear verschiebbar gelagert.

Die Feststeller 15 können so auch ein Auseinanderfallen von Aufnahmeeinheit 5 und Basis 4 beim Transport oder bei der Handhabung verhindern.

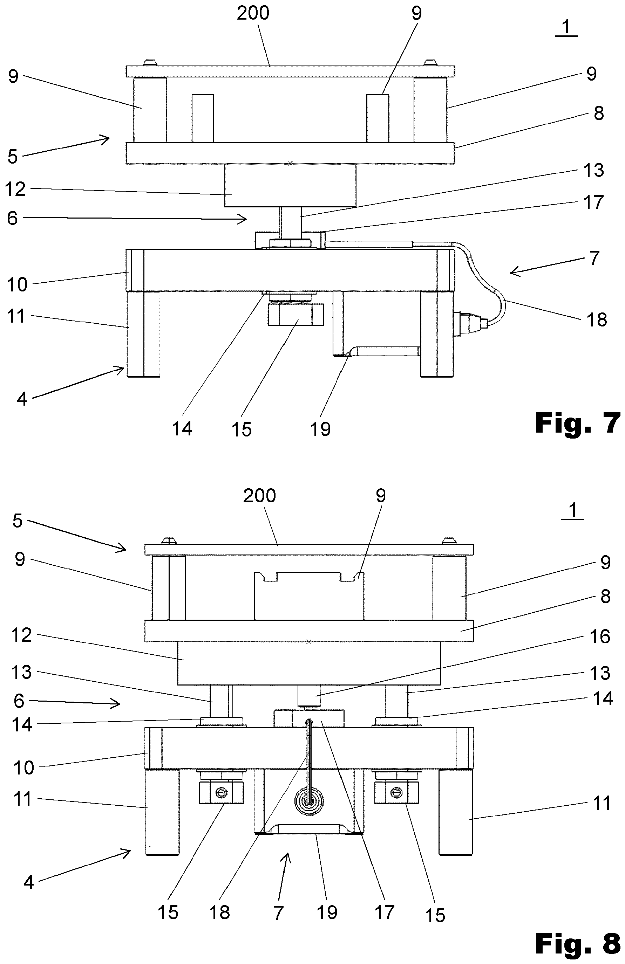

Die Sensoreinheit 7 kann einen Stempel 16, der in oder an dem Plattenträger 12 befestigt sein kann, ein Sensorelement 17, welches gegenüber dem Stempel 16 an der Oberseite des Rahmens 10 angeordnet ist, eine Schnittstelleneinheit 19 und eine Verbindungsleitung 18, welche eine signal- oder datentechnische Verbindung zwischen dem Sensorelement 17 und der Schnittstelleneinheit herstellen kann, aufweisen (vgl. etwa Figur 1, 8). Das Sensorelement 17 kann eine Kraftmesszelle oder eine sonstige auf eine eingeleitete Kraft reagierende Vorrichtung sein. Der Rahmen 10 kann nach Herstellerspezifikation für das Sensorelement 17 vorbereitet sein, etwa durch eine geeignete (beispielsweise ausreichend harte und gegebenenfalls geschliffene) Oberfläche und/oder eine oder mehrere Durchgangsbohrungen 52 zur Durchführung von Befestigungsschrauben (vgl. etwa Figur 9). Das Sensorelement kann beispielsweise einen Druckeinleitungsbereich und einen mit dem Druckeinleitungsbereich verbundenen Druckaufnahmebereich aufweisen. Der Druckaufnahmebereich kann in an sich bekannter Weise eine mit Dehnungsmesselementen, insbesondere in Form einer Wheatstone-DMS-Messbrücke, versehene Biegemembran sein, allerdings ist dies nur eine mögliche exemplarische Ausführung, welche die Erfindung nicht einschränkt. Grundsätzlich kann jede Technologie zur Kraftmessung zum Einsatz kommen. Ein Messbereich des Sensorelements 17 kann an den Anwendungsfall angepasst sein und beispielsweise bis 100 N oder 200 N reichen. Um eine gewisse Reserve zu haben, kann das Sensorelement 17 optional mit einem höheren Messbereich von beispielsweise bis zu 1000 N ausgelegt sein. Das Sensorelement 17 kann analoge Sensorsignale oder digitale Sensorsignale ausgeben. Das Sensorelement 17 kann eine Anschlussbuchse (nicht gezeigt) zum Anschließen der Verbindungsleitung 18 aufweisen. Alternativ kann die Verbindungsleitung 18 mit dem Sensorelement 17 integriert ausgebildet sein oder etwa über eine Kabelklemme angeschlossen sein.

Der Stempel 16 kann in den Plattenträger 12 beispielsweise eingeschraubt oder eingesteckt und spielfrei gesichert sein und kann zentrisch über oder direkt auf dem Sensorelement 17 angeordnet sein. Er kann unbelastet auf dem Krafteinleitungsabschnitt des Sensorelements 17 ruhen. Wenn daher eine Kraft in die Aufnahmeeinheit 5 eingeleitet wird, kann diese aufgrund der Linearführungseinheit 6 über den Stempel 16 linear auf das Sensorelement 17 geleitet werden, das hierauf ein Sensorsignal ausgibt. Das Sensorelement 17 kann so kalibriert oder kalibrierbar sein, dass eine Gewichtskraft der Aufnahmeeinheit 5 und der beweglichen Teile der Linearführungseinheit 6 (Plattenträger 12, Führungsstangen 13, Feststeller 15) am Sensorelement 17 kein Kraftsignal oder ein Null-Signal bewirkt.

Die Kalibrierung kann mechanisch durch Einstellen einer Vorlast oder elektrisch oder elektronisch oder virtuell erfolgen, vorteilhaft auch in einer nachgeordneten Einheit wie etwa Messverstärker, Datenschnittstelle oder Auswertungsvorrichtung, gegebenenfalls durch entsprechende Software.

Die Schnittstelleneinheit 19 kann mittels Schrauben 53 (vgl. etwa Figur 9) an der Unterseite des Rahmens 10 befestigt sein und kann über eine Verbindungsleitung 18 mit dem Sensorelement 17 verbunden sein. In Abwandlungen kann auch eine drahtlose Verbindung oder eine integrierte Anordnung von Sensoreinheit 17 und Schnittstelleneinheit 19 vorgesehen sein. Die Schnittstelleneinheit 19 kann eine Eingangsschnittstelle 20, an welcher die Verbindungsleitung 18 anschließbar ist und welche zum Empfang von Sensorsignalen oder - daten ausgebildet ist, und eine Datenschnittstelle 20, welche zur Ausgabe von Daten, welche den Sensorsignalen oder -daten entsprechen, ausgebildet ist, aufweisen. Die Schnittstelleneinheit 19 kann insbesondere ausgebildet sein, über die Eingangsschnittstelle 20 empfangene Sensorsignale in Sensordaten umzuwandeln, welche von der Auswertungsvorrichtung 2 weiterverarbeitet werden können. Hierzu kann die Schnittstelleneinheit 19 auch einen Messverstärker zum Verstärken des Sensorsignals, ein Abtastglied zum zeitlichen Diskretisieren des (verstärkten) Sensorsignals, eine Quantisierungsstufe zum wertemäßigen Diskretisieren des zeitdiskreten (verstärkten) Sensorsignals und einen Kodierer zum Kodieren des quantisierten Signals aufweisen. Die Datenschnittstelle 21 kann eine oder kann mehrere drahtgebundene und/oder drahtlose Schnittstellen unterschiedlicher Standards wie etwa USB, seriell, parallel, Ethernet, WLAN, Bluetooth, Infrarot, Mobilfunk, etc. aufweisen, um nur beispielhaft einige zu nennen, ohne dass die Erfindung hierauf eingeschränkt wäre. Entscheidend an dieser Stelle ist, dass die Datenschnittstelle in der Lage ist, Daten über irgend ein Protokoll mit einer externen Stelle auszutauschen. Die Datenverbindung 3 kann somit ein Kabel, das an ein von der Datenschnittstelle 21 der Schnittstelleneinheit 19 unterstützten Standard angepasst ist, oder eine Funkstrecke sein. Die Schnittstelleneinheit 19 kann auch über einen Energiemanagementabschnitt zur Versorgung der Schnittstelleneinheit 19 selbst und des Sensorelements 17 mit Betriebsenergie aufweisen. Der Energiemanagementabschnitt kann ein Netzteil oder einen Transformator oder ein Batteriefach oder eine Spannungsregelung oder dergleichen aufweisen. Die Betriebsenergie kann auch über die Datenschnittstelle 21 zuführbar sein. Die Betriebsenergie für das Sensorelement 17 kann über die Verbindungsleitung 18 zuführbar sein. Eine Betriebsenergie für die Schnittstelleneinheit 19 kann auch über die Datenverbindung 3 (etwa USB) zugeführt werden.

Die Auswertungsvorrichtung 2 kann einen Rechner 22, welche einer Zentraleinheit 23 aufweist, eine Eingabeeinrichtung 24, eine Anzeigeeinrichtung 25 und eine Datenschnittstelle 26 aufweisen. Die Datenschnittstelle 26 kann eine oder mehrere Schnittstellen unterschiedlicher Standards wie etwa USB, seriell, parallel, Ethernet, WLAN, Bluetooth, Infrarot, Mobilfunk etc. aufweisen, um nur beispielhaft einige zu nennen, ohne dass die Erfindung hierauf eingeschränkt wäre. Entscheidend an dieser Stelle ist, dass die Datenschnittstelle in der Lage ist, Daten über irgend ein Protokoll mit einer externen Stelle auszutauschen. Wenigstens ein Standard der Datenschnittstelle 26 des Rechners 22 kann mit wenigstens einem Standard der Datenschnittstelle 21 der Schnittstelleneinheit 19 identisch oder kompatibel sein. Andererseits kann Kompatibilität auch durch einen Wandler oder einen Adapter oder eine Treibersoftware herstellbar sein. Die Zentraleinheit 23 kann eine Anwendung verarbeiten, welche Daten, die von der Schnittstelleneinheit 19 der Prüfvorrichtung 1 geliefert werden, zu verarbeitet, um sie zu evaluieren und einem Benutzer über eine auf der Anzeigeeinrichtung 25 darstellbaren Anwenderschnittstelle 27 zugänglich zu machen. Die Anwenderschnittstelle 27 kann beispielsweise einen Diagrammbereich 28 und einen Menübereich 29 bereitstellen.

Im vorliegenden Ausführungsbeispiel ist der Rechner 22 ein Laptop, der die Zentraleinheit 23, die Eingabeeinrichtung 24, die Anzeigeeinrichtung 25 und die Datenschnittstelle 26 integriert aufweist. Dies schränkt jedoch die Erfindung nicht ein. Der Rechner 22 kann jede Art von Rechner sein, der in der Lage ist, eine Anwendung zu betreiben, um Daten, die von der Schnittstelleneinheit 19 der Prüfvorrichtung 1 geliefert werden, zu verarbeiten und zu evaluieren, um sie einem Benutzer zugänglich zu machen. Die Anwenderschnittstelle 27 kann von einer anderen Anwendung als derjenigen, welche die empfangenen Sensordaten evaluiert, bereitgestellt werden, ja sie kann auf einem ganz anderen Rechner ablaufen. Beispielsweise kann der Rechner 22 lediglich dazu vorgesehen sein, Sensordaten zu sammeln und ggf. zu evaluieren, um sie später auf einem anderen Rechner entfernt vom Standort der Prüfvorrichtung 1 einem Benutzer zugänglich zu machen. Hierzu können die Sensordaten zunächst auch nur aufgezeichnet und erst später ausgewertet werden.

Im Diagrammbereich 28 der Anwenderschnittstelle 27 kann eine Antwort des Sensorelements 17 als Verlauf einer Kraft F (Ordinate 31) über einer Zeit t (Abszisse 30) in Form eines Graphs 32 dargestellt werden (Figur 2). Es versteht sich, dass die dem Graph 32 entsprechenden Daten in Form von Daten als Tabelle oder dergleichen gespeichert und für eine weitere Verwendung zugänglich gehalten werden können. Der Nullpunkt der Abszisse 32 kann durch Erreichen einer Ansprechschwelle 33 definiert sein.

Mit anderen Worten, eine Auswertung kann erst mit Überschreiten eines Schwellenwerts des am Sensorelement 17 erfassten Drucks einsetzen. Alternativ kann eine Auswertung manuell oder ferngesteuert ausgelöst werden.

Die Aufnahmeelemente 9 der Aufnahmeeinheit 5 können zur Aufnahme unterschiedlicher Prüflehren 200 gestaltet sein und können auch austauschbar sein. Die Prüflehre 200 kann beispielsweise eine Standardlehre, wie sie im Labor Verwendung finden kann, oder ein Ausschnitt aus einer Rohkarosse sein.

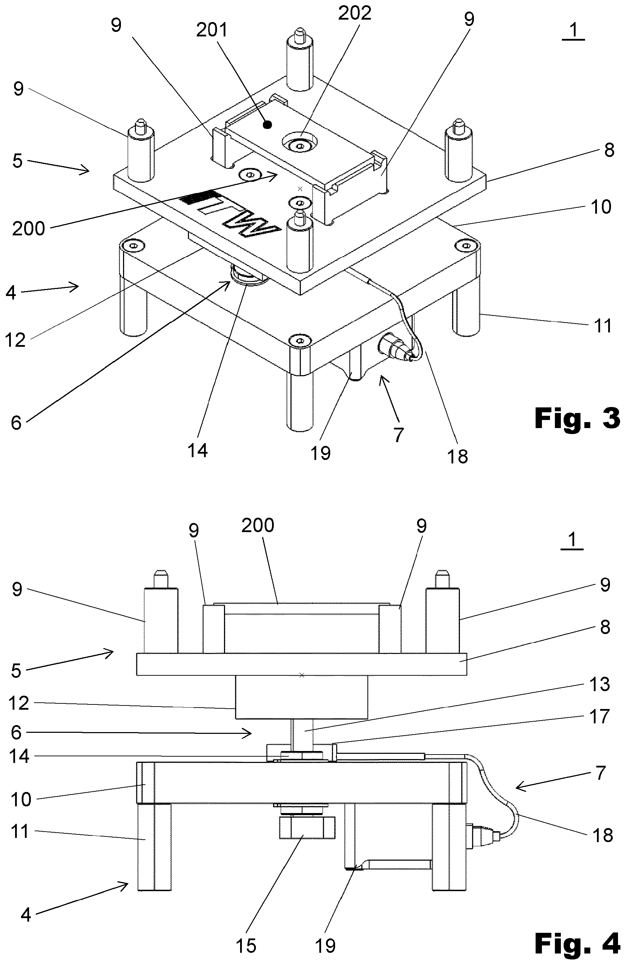

Eine als Standardprüflehre ausgebildete Prüflehre 200 kann beispielsweise eine Platte 201 definierter Breite und Länge sein, in welcher ein Aufnahmeabschnitt 202 zur Aufnahme eines Montage- oder Befestigungselements (nicht dargestellt) vorgesehen ist. Der Aufnahmeabschnitt kann in Form einer Aufnahmebohrung ausgebildet sein (Figur 3). Zur Aufnahme einer solchen Prüflehre 200 können beispielsweise zwei Aufnahmeelemente 9 in Form jeweils eines Balkens 43 vorgesehen sein (Figur 5), die auf der Aufspannplatte 8 jeweils mittels Schrauben 51 von der Gegenseite verschraubt sein können (Figur 9). Jeder Balken 43 kann eine von der Aufspannplatte 8 weg weisende und mit der Aufspannplatte 8 parallele Auflagefläche 44 aufweisen, die durch zwei Seitenanschläge 45 und einen Längsanschlag 46 berandet sein kann. Ein Abstand der Seitenanschläge 45 eines Balkens 43 entspricht der Breite der Prüflehre 200, und ein Abstand der Längsanschläge 46 beider Balken 43 entspricht der Länge der Prüflehre 200 derart, dass die Prüflehre 200 zwischen den Seitenanschlägen 45 und den Längsanschlägen 46 auf den Auflageflächen 44 ruhen kann (Figuren 3, 4). Die Seitenanschläge 45 und Längsanschläge 47 können einteilig mit den Balken 43 ausgebildet sein oder auf den Auflageflächen 44 oder seitlich an den Balken 43 angebracht oder anbringbar sein. Unterschiedliche Abmessungen der Platte 201 können durch unterschiedlich breite Seitenanschläge 45 und Längsanschläge 46 berücksichtigt werden.

Zur Aufnahme eines Karosserieblechs können beispielsweise vier Aufnahmeelemente 9 in Form jeweils einer Säule 47 vorgesehen sein (Figur 5), die auf der Aufspannplatte 8 jeweils mittels Schrauben 50 von der Gegenseite verschraubt sein können (Figur 9). Jede Säule 47 kann eine von der Aufspannplatte 8 weg weisende und mit der Aufspannplatte 8 parallele Auflagefläche 48 aufweisen, in welcher jeweils ein Zentrierpin 49 in axialer Richtung abragend vorzugsweise zentrisch ausgebildet sein kann. Eine aus einem Karosserieabschnitt ausgebildete Prüflehre 200 kann beispielsweise ein Blech oder eine Platte 211 sein, in welcher mehrere Zentrierbohrungen 212 und ein Aufnahmeabschnitt 213 zur Aufnahme eines Montage- oder Befestigungselements (nicht dargestellt) ausgebildet sein können (Figuren 6-9).

Der Aufnahmeabschnitt kann ein oder mehrere Aufnahmebohrungen aufweisen. Die Zentrierbohrungen 212 können in Durchmesser und Bohrbild den Zentrierpins 49 der Säulen 47 entsprechen. Die Zentrierpins 49 können mit den Säulen 47 jeweils einteilig ausgebildet oder separat ausgebildet und in den Säulen 47 verschraubt oder eingesetzt und spielfrei gesichert sein. Eine Säule kann mehrere Gewindebohrungen oder Bohrungen zur Aufnahme von Zentrierpins 49 aufweisen, um unterschiedliche Einspannsituationen bereitstellen zu können. Die Auflageflächen 48 der Säulen 47 können, wie dargestellt, kreisförmig sein oder eine andere Form aufweisen, um unterschiedliche Aufspannsituationen bereitstellen zu können.

Die Aufnahmeelemente 9 können über die Schrauben 50, 51 auch von der Aufspannplatte 8 entfernt werden und die Aufspannplatte 8 ohne weitere Aufnahmeelemente 9 verwendet werden. Ein Anwendungsfall kann beispielsweise ein kastenförmiges Karosserieteil oder Verkleidungsteil sein, das direkt auf die Aufspannplatte 8 aufgelegt werden und gegebenenfalls durch geeignete Mittel an der Aufspannplatte 8 fixiert werden kann. Es können damit auch Montagesituationen nachgestellt werden, in denen ein Montage- oder Befestigungselement an einem Teil angebracht werden soll, das mit der Hand fixiert werden muss. Im Allgemeinen kann die Aufnahmeeinheit 5 äußerst variabel gestaltet werden, um unterschiedlichste Teile aufnehmen und unterschiedlichste Montagesituationen nachstellen zu können. In einem solchen Fall kann die Aufspannplatte 8 selbst eine Halterung im Sinne der Erfindung bilden.

Zur Prüfung können in oder an den Aufnahmeabschnitt 202, 213 jeweils Montage- oder Befestigungselemente (nicht dargestellt) angeordnet werden. Dieses Anordnen kann einem vormontierten Zustand entsprechen und insbesondere ein lockeres Einführen beinhalten. Gegebenenfalls kann daraufhin eine Kalibrierung des Sensorelements 17 hinsichtlich der Auflagekraft (Nullausgang) erfolgen. Sodann kann ein Werker ein Montage- oder Befestigungselement in die Aufnahmebohrung 202, 213 manuell eindrücken. Dadurch kann ein Montagevorgang am realen Bauteil nachgestellt werden. Unabhängig von der Winkelrichtung des manuellen Eindrückvorgangs wird stets eine linear und zentrisch wirkende Kraft auf das Sensorelement 17 ausgeübt, die der Reaktionskraft in der realen Montagesituation entspricht. Das Sensorelement 17 kann ein der ausgeübten Kraft entsprechendes Sensorsignal über die Verbindungsleitung 18 an die Schnittstelleneinheit 19 ausgeben. Dieses Sensorsignal kann durch die Schnittstelleneinheit 19 gegebenenfalls in Sensordaten umgewandelt und über die Datenschnittstelle 20 ausgegeben werden.

Über die Datenverbindung 3 können die Sensordaten dann durch den Rechner 22 an der Datenschnittstelle 26 empfangen und weiter verarbeitet, insbesondere gespeichert, ausgewertet, der Benutzerschnittstelle zugeführt werden.

Wie oben erwähnt, kann die Auswertung der Sensordaten erst bei Einsetzen einer Ansprechschwelle 33 beginnen, die beispielsweise bei 10 N festgelegt sein kann. Bei manuellem Druck auf ein Montage- oder Befestigungselement kann sich typischerweise ein Verlauf einstellen, der dem in Figur 2 durch einen Graph 32 gezeigten ähnlich ist. Ein Anstiegsbereich 34 kann abschnittweise in etwa linear sein entsprechend einer kontinuierlich gesteigerten Einpresskraft des Werkers. Kurz vor nach Erreichen eines letzten Widerstands kann die Kraft ein erstes Maximum 35 aufweisen, um danach schlagartig abzufallen, was einem Einrasten des Montage- oder Befestigungselements entspricht. Da der Werker nach dem Einrasten mit dem Drücken nicht sofort aufhört, kann die Kraft nach einem Erreichen eines Minimums 36, das einem Andrücken des Montage- oder Befestigungselements am Werkstück (hier: der Messlehre 200) entspricht, auf ein zweites Maximum 37 ansteigen, um dann in einen Abfallabschnitt 38 überzugehen und, gegebenenfalls über Zwischenspitzen 39, in einen Null- oder Endabschnitt 40 auszulaufen. Die Messung kann beispielsweise bei Unterschreiten einer Abschaltschwelle (beispielsweise 1 oder 5 N oder ein beliebiger anderer, geeigneter Wert) oder nach Verstreichen einer vorbestimmten Zeit nach Nullausgang, gegebenenfalls unter Berücksichtigung eines Rauschens, beendet werden.

Über einen Menübereich 29 der Benutzerschnittstelle können beispielsweise Auswertungsparameter wie etwa Mess- und/oder Anzeigebereiche, Darstellungsarten, Glättungsfaktoren u.a. festgelegt, eine Kalibrierung des Sensorelements 17 vorgenommen, eine Messung scharf gemacht oder beendet werden. Neben einer Messkurve sind auch andere Möglichkeiten der grafischen Darstellung denkbar wie etwa eine Angabe von Zeiten oberhalb oder innerhalb bestimmter Kraftniveaus, ein Kraftintegral u.s.w.

Neben der Aufzeichnung der Messdaten des Sensorelements 17 kann auch ein Bewegungsablauf bei der Prüfung visuell erfasst werden und der erfasste Bewegungsablauf mit dem Kraftverlauf korreliert werden.

Die Auswertung des vorstehend beschriebenen Verfahrens kann vorteilhaft bei der Anlernung eines Werkers im Sinne ergonomischer Bewegungsabläufe ausgenutzt werden.

Das Wirkprinzip und einige Vorteile der Prüfvorrichtung können somit wie folgt zusammengefasst werden:
- das Verfahren beinhaltet ein Anbringen und ein manuelles Einpressen eines Montage- oder Befestigungselements an einer Prüflehre wie etwa einem Karosserieteil, die oder das auf einer Prüfvorrichtung aufgespannt ist;
- die Vorrichtung ist portabel und für eine Vielzahl von Prüflingen, insbesondere Montage- oder Befestigungselementen, und Anwendungsfällen, insbesondere Montagefällen, anpassbar;
- die Vorrichtung ist ergonomisch und erlaubt eine Prüfung von Verschlussstopfen, Verbindern, Befestigern und Steckern und anderen Montage- oder Befestigungselementen unter realen Bedingungen;
- die Vorrichtung und das Verfahren ermöglichen eine mechanische Prüfung eines Prüflings, bei der wesentliche Parameter des Vorgangs wie etwa Betätigungsgeschwindigkeit und -richtung sowie Bewegungsabläufe durch einen Menschen bei der konkreten Verwendung des Prüflings vorgegeben werden können und der Prüfvorgang unter den gleichen Bedingungen wie im tatsächlichen Einsatz durchgeführt werden;
- die Vorrichtung und das Verfahren ermöglichen eine automatische Auswertung und Visualisierung, um Rückschlüsse auf die Ergonomie des Prüflings in verschiedenen Anwendungsfällen zu ermöglichen;
- die Vorrichtung und das Verfahren ermöglichen insbesondere die realistische Erkennung von Kraftspitzen bei der Montage eines Montage- oder Befestigungselements;
- die Vorrichtung und das Verfahren ermöglichen gleichermaßen die Entwicklung von Montage- oder Befestigungselementen, die ergonomische Formmerkmale aufweisen, und die Verifikation und Demonstration der ergonomischen Eigenschaften im Sinne einer reduzierten oder minimierten Maximalkraft oder eines optimierten Kraftverlaufs und gegebenenfalls auch Karosserieteilen;
- die Vorrichtung und das Verfahren ermöglichen auch ein Anlernen eines Werkers hinsichtlich ergonomisch optimierter, insbesondere geringe Lastspitzen aufweisender Bewegungsabläufe beim Setzen von Montage- oder Befestigungselementen, wobei über die Benutzerschnittstelle eine unmittelbare Kontrolle ermöglicht wird.

Die Erfindung wurde vorstehend anhand von Ausführungsbeispielen und Varianten (die auch als Abwandlungen, Weiterbildungen, Alternativen oder Optionen bezeichnet sein können) beschrieben.

Die Erfindung selbst wird durch die beigefügten Ansprüche definiert. Die Darstellung und Beschreibung der Ausführungsbeispiele dient der Erläuterung und dem Verständnis der beanspruchten Erfindung. Einzelmerkmale eines Ausführungsbeispiels oder seiner Varianten können mit jedem anderen Ausführungsbeispiel oder diesbezüglichen Variante kombiniert werden und sollen auch in diesem Sinne als offenbart gelten, auch wenn sie in dem Zusammenhang nicht ausdrücklich beschrieben sind, es sei denn, dies wäre aus technischen oder physikalischen Gründen offensichtlich unmöglich oder sinnlos. Umgekehrt schränken Einzelmerkmale eines Ausführungsbeispiels oder seiner Varianten eine Erfindung nicht ein und können weggelassen werden, sofern die verbleibende Merkmalskombination eine technische Aufgabe löst. Insbesondere kann jede Zusammenstellung von hier beschriebenen Einzelmerkmalen, die eine technische Aufgabe in nicht naheliegender Weise löst, einen eigenen Erfindungsgegenstand bilden.

Der Aufbau der Prüfvorrichtung, der vorstehend beschrieben und anliegend gezeigt ist, ist in vielen Einzelheiten beispielhaft und nur zur Verdeutlichung der Erfindung gedacht. Beispielsweise kann der Aufbau aus Aufspannplatte 8, Plattenträger 12 und Stempel 16 so abgewandelt werden, dass die Aufspannplatte 8 und der Plattenträger 12 zu einem Bauteil vereinigt sind oder der Stempel 16 und der Plattenträger 12 zu einem Bauteil vereinigt sind oder alle drei Bauteile zu einem Bauteil vereinigt sind. Der Rahmen 10 mit den Füßen 11 kann ebenfalls als ein Bauteil ausgeführt sein.

Eine weitere Abwandlung betrifft eine schwenkbare Ausbildung der Basis 4, die auch die Nachstellung anderer Montagefälle unter anderen Belastungsrichtungen wie nur von oben ermöglicht.

### Liste der Bezugszeichen

- 1: Prüfvorrichtung
- 2: Auswertungsvorrichtung
- 3: Datenverbindung
- 4: Basis
- 5: Aufnahmeeinheit
- 6: Parallelführungseinheit
- 7: Sensoreinheit
- 8: Aufspannplatte
- 9: Aufnahmeelement
- 10: Rahmen
- 11: Fuß
- 12: Plattenträger
- 13: Führungsstange (Führungselement)
- 14: Lagereinheit
- 15: Feststeller
- 16: Stempel (Kraftübertragungsabschnitt)
- 17: Sensorelement
- 18: Verbindungsleitung
- 19: Schnittstelleneinheit
- 20: Eingangsschnittstelle
- 21: Datenschnittstelle
- 22: Rechner
- 23: Zentraleinheit
- 24: Eingabeeinrichtung
- 25: Anzeigeeinrichtung
- 26: Datenschnittstelle
- 27: Anwenderschnittstelle
- 28: Diagrammbereich
- 29: Menübereich
- 30: Abszisse
- 31: Ordinate
- 32: Graph
- 33: Ansprechschwelle
- 34: erster Anstiegsabschnitt
- 35: zweiter Anstiegsabschnitt
- 36: Lastabfall
- 37: Lastspitze
- 38: Abfallabschnitt
- 39: Zwischenspitzen
- 40: Endabschnitt
- 41: Schraube
- 42: Schraube
- 43: Balken
- 44: Auflagefläche
- 45: Seitenanschlag
- 46: Längsanschlag
- 47: Säule
- 48: Auflagefläche
- 49: Zentrierpin
- 50: Schraube
- 51: Schraube
- 52: Durchgangsbohrung
- 53: Schraube
- 54: Wellenabsatz
- 55: Schraube

- 100: Prüfsystem
- 200: Prüflehre
- 201: Platte (Blech)
- 202: Aufnahmeabschnitt
- 211: Platte (Blech)
- 212: Zentrierbohrung
- 213: Aufnahmeabschnitt

Die vorstehende Liste ist integraler Bestandteil der Beschreibung.

## Patentansprüche

1. Prüfverfahren mit den Schritten:
- Anordnen einer Prüflehre (200) in einer Prüfvorrichtung (1) mit einem Sensorelement (17) derart, dass eine auf die Prüflehre (200) ausgeübte Kraft auf das Sensorelement (17) übertragen wird;
- Anordnen eines Montage- oder Befestigungselements an oder in einem Aufnahmeabschnitt (202; 213) der Prüflehre (200);
- Ausüben einer manuellen Montagekraft auf das Montage- oder Befestigungselement, bis das Montage- oder Befestigungselement vollständig an oder in dem Aufnahmeabschnitt (202; 213) montiert ist; und
- Erfassen und Auswerten von Sensorsignalen, die während des Ausübens der manuellen Montagekraft durch das Sensorelement (17) ausgegeben werden.

2. Prüfverfahren gemäß Anspruch 1,
**dadurch gekennzeichnet,**
**dass** die manuelle Montagekraft durch Führungselemente (13) der Prüfvorrichtung (1) in eine lineare Druckkraft, die in einer definierten Richtung auf das Sensorelement (17) wirkt, umgewandelt wird.

3. Prüfverfahren gemäß Anspruch 1 oder 2,
**dadurch gekennzeichnet,**
**dass** eine Kalibrierung des Sensorelements (17) derart erfolgt, dass das Sensorelement (17) ohne Einwirkung der manuellen Montagekraft einen Nullausgang aufweist, wobei die Kalibrierung vorzugsweise mechanisch oder elektrisch oder elektronisch oder virtuell am Sensorelement (17) selbst, an einer Schnittstelleneinheit (19) oder einer Auswertungsvorrichtung (2) oder durch ein Softwareprogramm erfolgen.

4. Prüfverfahren gemäß einem der vorstehenden Ansprüche,
**dadurch gekennzeichnet,**
**dass** ein durch das Sensorelement (17) ausgegebenes, erfasstes Sensorsignal digitalisiert wird, um ein Sensordatensignal zu erzeugen, und das Auswerten an dem Sensordatensignal vorgenommen wird.

5. Prüfverfahren gemäß Anspruch 4,
**dadurch gekennzeichnet,**
**dass** das Sensordatensignal über eine Schnittstelleneinheit (19), die mit dem Sensorelement (17) verbunden ist, kabelgebunden oder drahtlos an eine Auswertungsvorrichtung (2) übertragen wird.

6. Prüfverfahren gemäß einem der vorstehenden Ansprüche,
**dadurch gekennzeichnet,**
**dass** das Auswerten wenigstens eines der folgenden umfasst:
- Aufzeichnen von Sensordatensignalen über einen festgelegten oder auswählbaren oder einstellbaren oder adaptiven Zeitraum;
- Visualisieren der Sensordatensignale in Form eines Graphs (32) oder einer Tabelle an einer Anzeigeeinrichtung (25);
- Verwerfen von Sensordatensignalen, deren Amplitude unterhalb einer festgelegten oder auswählbaren oder einstellbaren oder adaptiven Ansprechschwelle (33) liegen, für die Aufzeichnung und/oder Visualisierung;
- Korrelieren eines ermittelten Kraftverlaufs mit einem aufgezeichneten Bewegungsablauf;
- Bestimmen eines Lastniveaus;
- Ziehen von Rückschlüsse über ergonomische Aspekte des geprüften Montage- oder Befestigungselements oder Montagefalls.

7. Prüfvorrichtung (1), insbesondere zur Ausführung des Verfahrens nach einem der vorstehenden Ansprüche, aufweisend
eine Basis (4), die ein Sensorelement (17) trägt, und
eine Aufspannplatte (8) mit einer Halterung (9) zur Aufnahme einer Prüflehre (200),
wobei die Aufspannplatte (8) gegenüber der Basis (4) beweglich gelagert und derart angeordnet und geführt ist, dass eine auf die Aufspannplatte (8) wirkende Kraft auf das Sensorelement (17) übertragen wird,
wobei die Prüflehre (200) wenigstens einen Aufnahmeabschnitt (202; 213) zur Aufnahme eines Montage- oder Befestigungselements aufweist und an einen Montagefall des Montage- oder Befestigungselements angepasst oder anpassbar ist.

8. Prüfvorrichtung (1) gemäß Anspruch 7,
**dadurch gekennzeichnet,**
**dass**, wenn die Prüfvorrichtung (1) so angeordnet ist, dass die Aufspannplatte (8) oberhalb der Basis (4) liegt, die Aufspannplatte (8) auf dem Sensorelement (17) ruht, wobei vorzugsweise ein Kraftübertragungsabschnitt (16), insbesondere in Form eines Stempels oder Dorns, von der Aufspannplatte (8) in Richtung des Sensorelements (17) abragt und auf einem Krafteinleitungsabschnitt des Sensorelements (17) ruht.

9. Prüfvorrichtung (1) gemäß Anspruch 7 oder 8,
**dadurch gekennzeichnet,**
**dass** die Halterung (9) austauschbar ist und/oder mehrere Halterungen (9) für unterschiedliche Montage- oder Befestigungselemente und/oder Prüflehren (200) vorgesehen sind.

10. Prüfvorrichtung (1) gemäß einem der Ansprüche 7 bis 9,
**dadurch gekennzeichnet,**
**dass** die Prüflehre (200) eine Standardlehre ist oder eine Klammer, ein Blech oder ein Fahrzeugausschnitt, vorzugsweise Karosserieausschnitt, ist mit Abmessungen und Eigenschaften wie etwa Material, Dicke, Wölbung, Steifigkeit, die der realen Anwendung nachempfunden oder entnommen sind.

11. Prüfvorrichtung (1) gemäß einem der Ansprüche 7 bis 10,
**dadurch gekennzeichnet,**
**dass** Prüfvorrichtung (1) zur Lagerung und Führung der Aufspannplatte (8) eine Parallelführungseinheit (6) mit mindestens zwei parallelen Führungsstangen (13) aufweist, die an der Basis (4) axial verschiebbar gelagert sind.

12. Prüfvorrichtung (1) gemäß einem der Ansprüche 7 bis 11,
**dadurch gekennzeichnet,**
**dass** die Prüfvorrichtung (1) kann ferner eine Schnittstelleneinheit (19) aufweisen, die ausgebildet ist, um durch das Sensorelement (17) ausgegebene Sensorsignale zu digitalisieren, um Sensordatensignale zu erzeugen.

13. Prüfvorrichtung (1) gemäß einem der Ansprüche 7 bis 12,
**dadurch gekennzeichnet,**
**dass** die Prüfvorrichtung (1) eine Auswertungsvorrichtung (2) aufweist oder mit einer Auswertungsvorrichtung (2) zu einem Prüfsystem (100) verbunden ist, wobei die Auswertungsvorrichtung (2) drahtgebunden oder drahtlos mit einer Datenschnittstelle (21) der Prüfvorrichtung (1) verbunden oder verbindbar ist, um die Sensordatensignale zu empfangen, und die mit Mitteln zur Auswertung, insbesondere zur Evaluierung und/oder Visualisierung der empfangenen Daten versehen ist, wobei die Mittel zur Evaluierung und/oder Visualisierung durch Hardware und/oder Software verwirklicht sind.

14. Prüfvorrichtung (1) gemäß Anspruch 13,
**dadurch gekennzeichnet,**
**dass** die Auswertungsvorrichtung (2) ein mobiles Endgerät wie etwa Smartphone, Tablet oder sonstiger portabler Computer ist oder aufweist und/oder eine servergebundene Einrichtung ist oder aufweist, die über ein mobiles Endgerät zugänglich ist.

15. Prüfvorrichtung (1) gemäß Anspruch 13 oder 14,
**dadurch gekennzeichnet,**
**dass** die Datenschnittstelle (21) drahtlos und/oder drahtgebunden arbeitet, wobei die Datenschnittstelle vorzugsweise über mehrere Datenübertragungsstandards verfügt.

16. Prüfvorrichtung (1) gemäß einem der Ansprüche 7 bis 15,
**dadurch gekennzeichnet,**
**dass** die Prüfvorrichtung (1) portabel ist.

17. Prüfvorrichtung (1) gemäß einem der Ansprüche 7 bis 16,
**dadurch gekennzeichnet,**
**dass** die Prüfvorrichtung (1) auf der Seite der Halterung (9) offen ist.

18. Verfahren zum Anlernen eines Werkers beim Setzen eines Montage- oder Befestigungselements, wobei das Prüfverfahren nach einem der Ansprüche 1 bis 6 ausgeführt wird und dem Werker eine Auswertung der Sensorsignale nach jedem Prüfvorgang bereitgestellt wird.
